# EUROPEAN PATENT APPLICATION

(11) **EP 2 783 581 A1**
(43) Date of publication of application: **01.10.2014**
(21) Application number: 12852123.4
(22) Date of filing: 03.09.2012
(51) Int. Cl.: A23L 2/00, A23L 2/38

(54) **NON-ALCOHOLIC BEER WITH IMPROVED AFTERTASTE**

(30) Priority: 22.11.2011 JP 2011254874
(71) Applicant: Suntory Holdings Limited, Kita-ku Osaka-shi Osaka 530-8203 (JP)
(72) Inventor: TERANISHI, Takeshi, Fuchu-shi Tokyo 183-8533 (JP); MOTOHASHI, Itsuki, Fuchu-shi Tokyo 183-8533 (JP)
(74) Representative: Vossius & Partner
(86) International application number: PCT/JP2012/072314
(87) International publication number: WO 2013/077055

(57) **Abstract**

The present invention aims to provide a non-alcohol beer-taste beverage having a low saccharide content and a low calorie content, and that has an improved finish. The present invention provides a non-alcohol beer-taste beverage having an α acid content in a specific range and a total amount of an extract component(s) in a specific range.

## Description

### TECHNICAL FIELD

The present invention provides a non-alcohol, beer-taste beverage comprising a predetermined amount of α acid, the production method of the same and wort used in the production.

### BACKGROUND ART

Components derived from hops have an essential role in the savor of beer. Polyphenols derived from hops add richness to beer, and *Shimari* in the taste. Aromatic components derived from hops add a delightful flavor to the beer. Further, bitter components derived from hops add a crisp bitterness and excellent foam retention to the beer.

Components formed in the process of fermentation and aging, such as ester, and aroma derived from hops are brought together at a good balance to form beer aroma. The aroma components derived from hops are fat composed of 200 or more types of compounds, which contribute to forming subtle and varied aromas in beer. The aroma components are volatile, so they evaporate when they are boiled. Hence, hops, which are used to add aroma, are often added immediately before or after the wort-boiling step completes to suppress the volatilization of the aroma component. Also, Patent Document 1 reports that the off flavors from wort can be masked by adjusting the amount of the aroma component derived from hops to a predetermined range.

The amount of hops to be used affects *Shimari* in the taste in beer. In relation to this, Non-Patent Document 1 reports in p. 78 to 79 that decreasing the amount of hops in a rich-tasting beer obtained using a large quantity of malt leads to a beer that is unpleasant to drink due to the lack of *Shimari* in taste and an undesirable snappiness; and increasing the amount of hops in beer with relatively bland taste obtained using a small quantity of malt leads to a beer with an unbalanced flavor characterized by strong bitterness.

The recent health consciousness of consumers is increasing the demand for non-alcoholic beer-taste beverages, that is, beverages with 0.00% alcohol. A non-alcohol beer-taste beverage is often manufactured without being put through the fermentation step which generates alcohol, that is, at a condition that is exclusive of fermentation.

### CITATION LIST

### PATENT DOCUMENTS

Patent Document 1: Japanese Patent Unexamined Publication No. 2011-19471

### NON-PATENT DOCUMENTS

Non-Patent Document 1: Junji Watari "Biru no Kagaku (Science of Beer)", June 4, 2010, 7th issue, Kodansha.

### SUMMARY OF INVENTION

### TECHNICAL PROBLEM

To realize a low saccharide content and a low calorie content in the non-alcohol beer-taste beverage, the total amount of its extract components needs to be made low. Thus, a non-alcohol beer-taste beverage containing extract components at a low total amount was produced by introducing hops immediately before or after the wort-boiling step completed, as common in beer production. The resulting non-alcohol beer-taste beverage was found to leave a finish with strong bitterness after it has been swallowed. Such problem is a major problem of non-alcohol beer-taste beverages produced without fermentation, especially those whose total amount of extract components is low.

The present invention aims to provide a non-alcoholic beer-taste beverage whose bitterness in the finish is improved.

### SOLUTION TO PROBLEM

In view of the above situation, the inventors of the present invention conducted intensive studies and found that a non-alcohol beer-taste beverage having a total amount of extract components that is relatively low can have improved finish, with no lingering bitterness in its finish, if an α acid content is in a specific range; and completed the invention.

The present invention provides a non-alcohol beer-taste beverage, a production method thereof and wort used in the production according to (1) to (23).
(1) A non-alcohol beer-taste beverage, wherein a total amount of an extract component(s) is from 0.05 to 0.5% by weight inclusive, and an α acid content is from 0 to 0.1 ppm inclusive.
(2) The non-alcohol beer-taste beverage according to (1), wherein the α acid content is from 0 to 0.05 ppm inclusive.
(3) The non-alcohol beer-taste beverage according to (1), wherein the α acid content is from 0 to 0.03 ppm inclusive.
(4) The non-alcohol beer-taste beverage according to (1), wherein the α acid content is from 0 to 0.01 ppm inclusive.
(5) The non-alcohol beer-taste beverage according to any one of (1) to (4), wherein the total amount of the extract component(s) is from 0.1 to 0.35% by weight inclusive.
(6) The non-alcohol beer-taste beverage according to any one of (1) to (5), wherein a calorie content is from 0.2 to 2 kcal/100 ml inclusive.
(7) The non-alcohol beer-taste beverage according to (6),wherein the calorie content is from 0.2 to 1.4 kcal/100 ml inclusive.
(8) The non-alcohol beer-taste beverage according to any one of (1) to (7), wherein a saccharide content is from 0.05 to 0.5 g/100 ml inclusive.
(9) The non-alcohol beer-taste beverage according to (8), wherein the saccharide content is from 0.1 to 0.35 g/100 ml inclusive.
(10) The non-alcohol beer-taste beverage according to any one of (1) to (9), wherein the extract component(s) comprise a *mugi*-derived extract component(s).
(11) The non-alcohol beer-taste beverage according to (1) to (10), which is a non-fermented, non-alcohol, beer-taste beverage.
(12) Wort having a total amount of an extract component(s) that is from 0.05 to 0.5% by weight inclusive, and an α acid content that is from 0 to 0.1 ppm inclusive.
(13) The wort according to (12), wherein the α acid content is from 0 to 0.05 ppm inclusive.
(14) The wort according to (12), wherein the α acid content is from 0 to 0.03 ppm inclusive.
(15) The wort according to (12), wherein the α acid content is from 0 to 0.01 ppm inclusive.
(16) The wort according to any one of (12) to (15), wherein the total amount of the extract component(s) is from 0.1 to 0.35 % by weight inclusive.
(17) A production method for producing a non-alcohol beer-taste beverage comprising a step of adding a seasoning component and carbonic acid gas to wort having a total amount of an extract component(s) that is from 0.05 to 0.5% by weight inclusive, and an α acid content that is from 0 to 0.1 ppm inclusive.
(18) The production method of (17), wherein the α acid content is from 0 to 0.05 ppm inclusive.
(19) The production method of (17,) wherein the α acid content is from 0 to 0.03 ppm inclusive.
(20) The production method of (17), wherein the α acid content is from 0 to 0.01 ppm inclusive.
(21) The production method according to any one of (17) to (20), wherein the total amount of the extract component(s) is from 0.1 to 0.35% by weight inclusive.
(22) The production method according to any one of (17) to (21), which is exclusive of fermentation.
(23) The production method according to any one of (17) to (22), for producing the non-alcohol beer-taste beverage according to any one of (1) to (11).

### ADVANTAGEOUS EFFECTS OF INVENTION

The present invention can provide a non-alcohol beer-taste beverage having a low saccharide content and a low calorie content, and whose finish is improved so that the bitterness in the finish does not linger after the beverage has been swallowed.

### DESCRIPTION OF EMBODIMENTS

### <Non-Alcohol Beer-Taste Beverage>

As one aspect, the present invention provides a non-alcohol beer-taste beverage. In particular, in the present specification, the non-alcohol beer-taste beverage can be a non-fermented beer-taste beverage. The non-alcohol beer-taste beverage comprises α acid. As described below, to accomplish the low saccharide content and the low calorie content in a non-alcohol beer-taste beverage which is essentially free of alcohol, it is necessary to reduce the total amount of extract components. The existence of α acid in a non-alcohol beer-taste beverage having a low total amount of extract components will cause an unpleasant finish, since it induces an excessive sense of bitterness in the finish after swallowing; thus, it is undesirable from the point of view of savor. This is a problem specific to non-alcohol beer-taste beverages that have a low total amount of extract components, since it was not acknowledged in common beer, produced by performing the fermentation process, or in non-alcohol beer-taste beverage with a relatively high total amount of extract components.

The term "bitterness in the finish" with regard to the taste refers to a sensation of gustation, which is a bitterness that is sensed after the beverage is removed from the oral cavity (distinguished from the sensation felt when a material is present in the oral cavity).

Accordingly, the non-alcohol beer-taste beverage of the present invention contains α acid in specific amounts to solve the problem. A typical α acid content in the non-alcohol beer-taste beverage of the present invention is from 0 to 0.1 ppm inclusive, preferably from 0 to 0.05 ppm inclusive, more preferably from 0 to 0.03 ppm inclusive, even more preferably from 0 to 0.01 ppm inclusive. In further examples, the α acid content is from 0 to 0.1 ppm inclusive, preferably from 0 to 0.05 ppm inclusive, more preferably from 0 to 0.04 ppm inclusive, even more preferably from 0 to 0.03 ppm inclusive, still more preferably from 0 to 0.02 ppm inclusive, and still even more preferably from 0 to 0.01 ppm inclusive. The α acid content is measured according to "Beer Analysis Methods of BCOJ (2004.11.1 Revised ed.) 7.13 iso-α acid, α acid" determined by the Brewery Convention of Japan (BCOJ) of Brewers Association of Japan.

The term "α acid" used in the present specification is a substance which is also called humulone, and is known as a bitterness component derived from hops. Any hops used in the production of beer and the like can be used in the present specification, and one or more hops can be selected from hops including processed hops, such as dried hop cone, pelletized hops, powder hops, hop extracts and iso-hops, hexa-hops, tetra-hops, depending on the purpose of use.

Polyphenols are important in the present invention from the view point of savor, since they can add *Shimari* in taste to the non-alcohol beer-taste beverage. Hence, it is preferable to use hops having a high polyphenol content to increase the polyphenol content of the non-alcohol beer-taste beverage. Pelletized hops contain more polyphenols than hop extracts, so they can be suitably used in the present invention.

The term "beer-taste beverages" as used herein refers to carbonated drinks having a beer-like flavor. Thus, unless otherwise noted, beer-taste beverages as referred to herein embrace all types of carbonated drinks with a beer flavor whether or not they are produced via a yeast-based fermentation step. The present invention is directed to a particular type, non-alcoholic type, for example, unfermented non-alcoholic type, of these beverages, which is substantially free of alcohol. It should be noted here that beverages which contain alcohol in a trace amount that is too small to be detected are within the scope of the beverages of the present invention. Included within the scope of the non-alcohol beverage of the present invention are beverages the alcohol content of which is calculated to be 0.0%, in particular, 0.00% by counting fractions of 5 and over as a unit and cutting away the rest. Since it is difficult to completely remove alcohol from beverages that has been fermented by yeast, a beverage with alcohol at a level of 0.00% by counting fractions of 5 and over as a unit and cutting away the rest, should preferably be produced by a method that is exclusive of fermentation. In the present specification, the term "non-fermented" or "exclusive of fermentation" refers to the lack of decomposition of organic matters by microorganism, and it specifically refers to the lack of alcohol developing from decomposition of organic matters by yeast. Exemplary types of the non-alcoholic beer-taste beverages of the present invention include non-fermented, non-alcohol, beer-taste beverages, beer-taste soft drinks, and the like.

The alcohol content in the beer-taste beverage in the present specification is the content of alcohol in the beverage (v/v%); the alcohol can be measured using any known method, specifically using an oscillating densimeter. A specific example is provided below. The beverage is filtered or subjected to ultrasonication to prepare a sample that is free of carbonic acid gas. The sample was put under direct fire for distillation to obtain a distilled solution, and the density of the solution was measured at 15°C. "Table 2 Conversion Table for Alcohol and Density (15°C) and Specific Gravity (15/15°C)" in the appendix table to the Predetermined Analysis Method of the National Tax Agency (Directive No. 6 of the National Tax Agency in 2007, revised June 22, 2007) was used to convert the above measurement to obtain the alcohol content in the beverage. Further, if the alcohol is at a low concentration (e.g. lower than 1.0 v/v%), it can be measured using a commercial alcohol measurement device or gas chromatography or the like.

The non-alcohol beer-taste beverage of the present invention contains an extract component(s). The total amount of the extract component(s) in the non-alcohol beer-taste beverage of the present invention affects the effect of the present invention, which is to provide a beverage having a low saccharide content and a low calorie content. Hence, the total amount of the extract component(s) in the non-alcohol beer-taste beverage can be any amount as long as it is in a range that does not hinder the effect of the present invention. The range can be defined by any combination of a lower limit of 0.05% by weight or higher, preferably 0.075% by weight or higher, even more preferably 0.1% by weight or higher, still more preferably 0.15% by weight or higher, still even more preferably 0.2% by weight or higher, and an upper limit of 1% by weight or lower, preferably 0.8% by weight or lower, more preferably 0.6% by weight or lower, even more preferably 0.5% by weight or lower, still more preferably 0.4% by weight or lower, still even more preferably 0.35% by weight or lower, more preferably 0.3% by weight or lower. The total amount of the extract component(s) in the non-alcohol beer-taste beverage of the present invention can for example be from 0.1 to 0.5% by weight inclusive, preferably from 0.1 to 0.25% by weight inclusive, more preferably from 0.1 to 0.125% by weight inclusive. Further examples include the total amounts of the extract component(s) in the non-alcohol beer-taste beverage of the present invention of from 0.05 to 1% by weight inclusive, preferably from 0.05 to 0.8% by weight inclusive, more preferably from 0.05 to 0.6% by weight inclusive, even more preferably from 0.05 to 0.5% by weight inclusive, still more preferably from 0.05 to 0.4% by weight inclusive, still even more preferably from 0.075 to 0.35% by weight inclusive, more preferably from 0.1 to 0.35% by weight inclusive, more preferably from 0.15 to 0.35% by weight inclusive, and most preferably from 0.2 to 0.3% by weight inclusive.

The total amount of the extract component(s) as mentioned in the present specification is the sum of the extract component(s) contained in the non-alcohol beer-taste beverage, and it can be measured according to the "Beer Analysis Methods of BCOJ (2004.11.1 Revised ed.) 7.2 Extracts".

Further, the above mentioned extract components may contain a *mugi*-derived extract component(s). The *mugi*-derived extract component(s) in the present specification may be any extract component(s) derived from *mugi,* such as malt, and *mugi* of any origin can be used as a source. The total amount of the extract component(s) derived from *mugi* may be determined for their amount by subtracting the amounts, as separately determined, of additives and extract components derived from other ingredients, from the amounts of all extract components.

The total amount of the *mugi*-derived extract component(s) in the non-alcohol beer-taste beverage of the present invention can be in the range defined by any combination of a lower limit of 0.05% by weight or higher, preferably 0.075% by weight or higher, more preferably 0.1% by weight or higher, even more preferably 0.15% by weight or higher, still more preferably 0.2% by weight or higher, and an upper limit of 1% by weight or lower, preferably 0.8% by weight or lower, more preferably 0.6% by weight or lower, even more preferably 0.5% by weight or lower, still more preferably 0.4% by weight or lower, still even more preferably 0.35% by weight or lower, more preferably 0.3% by weight or lower. The total amount of the *mugi*-derived extract component(s) in the non-alcohol beer-taste beverage of the present invention can be from 0.1 to 0.5% by weight inclusive, preferably from 0.1 to 0.25% by weight inclusive, more preferably from 0.1 to 0.125% by weight inclusive. Further examples of the total amount of the *mugi*-derived extract component(s) in the non-alcohol beer-taste beverage are from 0.05 to 1% by weight inclusive, preferably from 0.05 to 0.8% by weight inclusive, more preferably from 0.05 to 0.6% by weight inclusive, even more preferably from 0.05 to 0.5% by weight inclusive, still more preferably from 0.05 to 0.4% by weight inclusive, still even more preferably from 0.075 to 0.35% by weight inclusive, more preferably from 0.1 to 0.35% by weight inclusive, more preferably from 0.15 to 0.35% by weight inclusive, and most preferably from 0.2 to 0.3% by weight inclusive.

The term *"mugi"* as used herein means *mugi* that is commonly employed in producing beers and *happoshu.* The above *mugi* means Poaceae grains with similar appearances. It includes barley, wheat, rye, *karasumugi* (white oats), oat, *hatomugi* (Job's tears), *embaku* (oats), and the one preferably used is barley. A single type can be used alone or two or more types can be combined for use. The above *mugi* may or may not be germinated, but germinated *mugi* is preferable in the present invention. Malt is more preferable among the germinated *mugi.* Malt as mentioned in the present specification is a product obtained by drying the sprouts of *mugi,* and removing their roots.

The calorie content of the non-alcohol beer-taste beverage of the present invention can be in the range of any combination of a lower limit that is 0.2 kcal or higher, preferably 0.4 kcal or higher, more preferably 0.6 kcal or higher, even more preferably 0.8 kcal or higher, and an upper limit of 4 kcal or lower, preferably 2 kcal or lower, more preferably 1.8 kcal or lower, even more preferably 1.6 kcal or lower, still more preferably 1.4 kcal or lower, still even more preferably 1.2 kcal or lower, per 100 ml of the beverage. The calorie content of the non-alcohol beer-taste beverage of the present invention can be in the range of from 0.4 to 2 kcal inclusive, preferably from 0.4 to 1 kcal inclusive, more preferably from 0.4 to 0.5 kcal inclusive, per 100 ml of the beverage. Further examples of the calorie content of non-alcohol beer-taste beverage are from 0.2 to 4 kcal inclusive, preferably from 0.2 to 2 kcal inclusive, more preferably from 0.2 to 1.8 kcal inclusive, even more preferably from 0.2 to 1.6 kcal inclusive, still more preferably from 0.4 to 1.6 kcal inclusive, still even more preferably from 0.6 to 1.4 kcal inclusive, more preferably from 0.8 to 1.2 kcal inclusive, per 100 ml of the beverage.

The calorie content in the beverages is calculated basically in accordance with "On Analysis Methods, etc. for Nutrients, etc. Listed in the Nutrition Labelling Standards" as published in association with the Health Promotion Act.

In other words, as a rule, the calorie can be obtained by multiplying the quantified amount of each nutrient with its energy conversion factor (protein: 4 kcal/g, fat: 9 kcal/g, saccharide: 4 kcal/g, dietary fiber: 2 kcal/g, alcohol: 7 kcal/g, organic acid: 3 kcal/g) and totaling the products. For details, see "On Analysis Methods, etc. for Nutrients, etc. Listed in the Nutrition Labelling Standards."

Specific techniques for measuring the amounts of the respective nutrients contained in beverages may comply with the various methods of analysis described in "On Analysis Methods, etc. for Nutrients, etc. Listed in the Nutrition Labelling Standards" as a supplement to the Health Promotion Act. Alternatively, the Japan Food Research Laboratories (Foundation) will provide such calorific values and/or the amounts of the respective nutrients upon request.

The non-alcohol beer-taste beverage of the present invention comprises saccharides. The term "saccharides" as used herein refers to ones based on the Nutrition Labelling Standards for Foods (Health, Labor and Welfare Ministry Notice No. 176 in 2003). Saccharide includes monosaccharides and oligosaccharides such as disaccharides, trisaccharides, tetrasaccharides to decasaccharides, and monosaccharides and disaccharides are preferable in the present invention. Monosaccharides include glucose, fructose, galactose, and mannose. Disaccharides include sucrose, lactose, maltose, trehalose, cellobiose. The saccharide content in the non-alcohol beer-taste beverage of the present invention can be in a range of any combination of a lower limit of 0.05 g/100 ml or higher, preferably 0.075 g/100 ml or higher, more preferably 0.1 g/100 ml or higher, even more preferably 0.2 g/100 ml or higher, and a higher limit of 1 g/100 ml or lower, preferably 0.8 g/100 ml or lower, more preferably 0.6 g/100 ml or lower, even more preferably 0.5 g/100 ml or lower, still more preferably 0.4 g/100 ml or lower, still even more preferably 0.35 g/100 ml or lower, even more preferably 0.3 g/100 ml or lower. The saccharide content in the non-alcohol beer-taste beverage of the present invention can be from 0.1 to 0.5 g/100 ml inclusive, preferably from 0.1 to 0.25 g/100 ml inclusive, more preferably from 0.1 to 0.125 g/100 ml inclusive. Further examples of the saccharide content in the non-alcohol beer-taste beverage are from 0.05 to 1 g/100 ml inclusive, preferably from 0.05 to 0.8 g/100 ml inclusive, more preferably from 0.05 to 0.6 g/100 ml inclusive, even more preferably from 0.05 to 0.5 g/100 ml inclusive, still more preferably from 0.05 to 0.4 g/100 ml inclusive, still even more preferably from 0.075 to 0.35 g/100 ml inclusive, more preferably from 0.1 to 0.35 g/100 ml inclusive, more preferably from 0.2 to 0.3 g/100 ml inclusive.

The saccharide content can be obtained by subtracting the amount of protein, fat, dietary fiber, ash, alcohol and water from the weight of the entire beverage. The protein, fat, dietary fiber, ash and water can be measured by the methods in the Nutrition Labeling Standards. Specifically, the mass of protein can be measured by the nitrogen determination and conversion method. The amount of fat can be measured by the ether extracting method, chloroform-methanol mixture extracting method, the Gerber method, the acid hydrolysis method, or the Roese-Gottlieb method. The amount of dietary fiber can be measured by the high performance liquid chromatography method or the ashing method with added sulfuric acid. The amount of water can be measured using the Karl Fischer technique, the drying aid method, a method of heating and drying under reduced pressure, a method of heating and drying under normal pressure, or a plastic film method. These measurement methods are commonly known among persons skilled in the art.

The non-alcohol beer-taste beverage of the present invention comprises iso-α acid. Iso-α acid described herein is also referred to as isohumulone, and it is known as an isomer of α acid (humulone). Iso-α acid has a pleasant bitterness, whose finish does not linger. Further, iso-α acid is known to be formed by isomerizing α acid through heat treatment or other methods. Hence, the transformation of α acid to iso-α acid in the production of non-alcohol beer-taste beverages is preferable from the point of view of improving the finish of the non-alcohol beer-taste beverage.

As another aspect, the present invention provides wort containing α acid at a specific amount and having a total amount of the extract component(s) in a specific range. The wort of the present invention can be obtained by boiling the wort filtrate obtained after mashing. The above-mentioned wort can be suitably used in the production of non-alcoholic beer-taste beverage having improved finish, with no lingering bitterness in its finish after swallowing. Examples of α acid contents of the wort of the present invention are from 0 to 0.1 ppm inclusive, preferably from 0 to 0.05 ppm inclusive, more preferably from 0 to 0.03 ppm inclusive, even more preferably from 0 to 0.01 ppm inclusive. Further examples of the α acid contents are from 0 to 0.1 ppm inclusive, preferably from 0 to 0.05 ppm inclusive, more preferably from 0 to 0.04 ppm inclusive, even more preferably from 0 to 0.03 ppm inclusive, still more preferably from 0 to 0.02 ppm inclusive, still even more preferably from 0 to 0.01 ppm inclusive. The present invention includes wort that is essentially free of α acid. In other words, wort containing α acid at the detection limit or lower is encompassed in the present invention.

The total amount of the extract component(s) in the wort of the present invention can be in the range defined by any combination of a lower limit of 0.05% by weight or higher, preferably 0.075% by weight or higher, more preferably 0.1% by weight or higher, even more preferably 0.15% by weight or higher, still more preferably 0.2% by weight or higher, and an upper limit of 1% by weight or lower, preferably 0.8% by weight or lower, more preferably 0.6% by weight or lower, even more preferably 0.5% by weight or lower, still even more preferably 0.4% by weight or lower, more preferably 0.35% by weight or lower, most preferably 0.3% by weight or lower. The total amount of the extract component(s) in the wort of the present invention can for example be from 0.1 to 0.5% by weight inclusive, preferably from 0.1 to 0.25% by weight inclusive, more preferably from 0.1 to 0.125% by weight inclusive. For example, the total amount of the extract component(s) in the wort of the present invention can further be from 0.05 to 1% by weight inclusive, preferably from 0.05 to 0.8% by weight inclusive, more preferably from 0.05 to 0.6% by weight inclusive, even more preferably from 0.05 to 0.5% by weight inclusive, still more preferably from 0.05 to 0.4% by weight inclusive, still even more preferably from 0.075 to 0.35% by weight inclusive, more preferably from 0.1 to 0.35% by weight inclusive, more preferably from 0.15 to 0.35% by weight inclusive, and most preferably from 0.2 to 0.3% by weight inclusive.

Further, the wort of the present invention may contain a *mugi*-derived extract component(s). If the *mugi*-derived extract compoenent(s) are contained, the total amount can be in the range defined by any combination of a lower limit of 0.05% by weight or higher, preferably 0.075% by weight or higher, more preferably 0.1% by weight or higher, even more preferably 0.15% by weight or higher, still more preferably 0.2% by weight higher, and an upper limit of 1% by weight or lower, preferably 0.8% by weight or lower, more preferably 0.6% by weight or lower, even more preferably 0.5% by weight or lower, still more preferably 0.4% by weight or lower, still even more preferably 0.35% by weight or lower, more preferably 0.3% by weight or lower. Examples of the total amount of the *mugi-*derived extract component(s) in the present invention are from 0.1 to 0.5% by weight inclusive, preferably from 0.1 to 0.25% by weight inclusive, more preferably from 0.1 to 0.125% by weight inclusive. Further examples of the total amount of the *mugi*-derived extract component(s) are from 0.05 to 1% by weight inclusive, preferably from 0.05 to 0.8% by weight inclusive, more preferably from 0.05 to 0.6% by weight inclusive, even more preferably from 0.05 to 0.5% by weight inclusive, still more preferably from 0.05 to 0.4% by weight inclusive, still even more preferably from 0.075 to 0.35% by weight inclusive, more preferably from 0.1 to 0.35% by weight inclusive, more preferably from 0.15 to 0.35% by weight inclusive, and most preferably from 0.2 to 0.3% by weight inclusive.

The total amount of the extract component(s) in the wort can be measured according to the "Beer Analysis Methods of BCOJ (2004.11.1 Revised ed.) 7.2 Extracts".

A non-alcohol beer-taste beverage can be obtained by adding degassed water, carbonic acid gas, seasoning components and the like to the wort of the present invention. That is, the wort of the present invention is useful as an intermediate to produce a non-alcohol beer-taste beverage. The wort can be stored in the storage tank, container and the like until its use. The wort can be stored at a normal temperature (25°C) or lower, but it is preferable to cool wort during storage to suppress degradation. Wort is cooled herein at, for example, 20°C or lower, preferably 15°C or lower, and more preferably 10°C or lower. Cooled wort is referred to particularly as cold wort. One embodiment of the use of wort in the present invention comprises processes of producing wort in a factory as an intermediate of a non-alcohol beer-taste beverage, filling the wort in a refrigerating container, delivering it to other factories in this country or abroad, and producing a non-alcohol beer-taste beverage.

### <Production Method of Non-Alcohol Beer-Taste Beverage>

As another aspect, the present invention provides a production method of non-alcohol beer-taste beverage. Any means can be used in the production method as long as a non-alcohol beer-taste beverage comprising α acid at a specific amount and having a total amount of the extract component(s) in a specific range is produced. For example, the production method of non-alcohol beer-taste beverage of the present invention comprises a wort preparation step and a product preparation step.

The wort preparation step as defined in the present specification comprises a mashing step, which includes a saccharification step and a proteolysis step, a wort-filtering step, and a wort-boiling step.

The saccharification step in the mashing step is a step of suspending and dissolving the carbon source and/or the nitrogen source, that is derived from malt and the like crushed in a pulverizer, in water to decompose starch or the like to generate saccharides. The proteolysis step is a step of decomposing protein, peptide and the like to generate amino acids and oligopeptides. The mashing step is for example carried out by mixing raw materials such as malt and water, and processing the mixture at a given temperature for a given time. When using malt as the raw material, the malt should be crushed malt.

The amounts of malt, secondary ingredients, and water to be used in the mashing step can be set so that the range of the total amount of the extract component(s) in wort obtained through the wort preparation step or the total amount of the extract component(s) in the non-alcohol beer-taste beverage obtained through the wort preparation step and the product preparation step is any combination of a lower limit of 0.05% by weight or higher, preferably 0.075% by weight or higher, more preferably 0.1% by weight or higher, even more preferably 0.15% by weight or higher, still more preferably 0.2% by weight or higher, and an upper limit of 1% by weight or lower, preferably 0.8% by weight or lower, more preferably 0.6% by weight or lower, even more preferably 0.5% by weight or lower, still more preferably 0.4% by weight or lower, still even more preferably 0.35% by weight or lower, and most preferably 0.30% by weight or lower. The amounts of wort, secondary ingredients, and water to be used in the mashing step can be for example set so that the range of the total amount of the extract component(s) in wort obtained through the wort preparation step or the total amount of the extract component(s) in the non-alcohol beer-taste beverage obtained through the wort preparation step and the product preparation step is from 0.1 to 0.5% by weight inclusive, preferably from 0.1 to 0.25% by weight inclusive, more preferably from 0.1 to 0.125% by weight inclusive. For example, the amounts of wort, secondary ingredients, and water to be used in the mashing step can be further set so that the range of the total amount of the extract component(s) in wort obtained through the wort preparation step or the total amount of the extract component(s) in the non-alcohol beer-taste beverage obtained through the wort preparation step and the product preparation step is from 0.05 to 1% by weight inclusive, preferably from 0.05 to 0.8% by weight inclusive, more preferably from 0.05 to 0.6% by weight inclusive, even more preferably from 0.05 to 0.5% by weight inclusive, still even more preferably from 0.05 to 0.4% by weight inclusive, more preferably from 0.075 to 0.35% by weight inclusive, more preferably from 0.1 to 0.35% by weight inclusive, more preferably from 0.15 to 0.35% by weight inclusive, and most preferably from 0.2 to 0.3% by weight inclusive.

Further, the conditions of the mashing step can be set so that the saccharide content in wort obtained through the wort preparation step or the saccharide content in the non-alcohol beer-taste beverage obtained through the wort preparation step and the product preparation step is in a range of any combination of a lower limit of 0.05 g/10ml or higher, preferably 0.075 g/100 ml or higher, more preferably 0.1 g/100 ml or higher, even more preferably 0.2 g/100 ml or higher and an upper limit of 1 g/100 ml or lower, preferably 0.8 g/100 ml or lower, more preferably 0.6 g/100 ml or lower, even more preferably 0.5 g/100 ml or lower, still more preferably 0.4 g/100 ml or lower, still even more preferably 0.35 g/100 ml or lower, more preferably 0.35 g/100 ml or lower, more preferably 0.3 g/100 ml or lower. The conditions of the mashing step can be for example set so that the saccharide content in wort obtained through the wort preparation step or the saccharide content in the non-alcohol beer-taste beverage obtained through the wort preparation step and the product preparation step is from 0.1 to 0.5 g/100 ml inclusive, preferably from 0.1 to 0.25 g/100 ml inclusive, more preferably from 0.1 to 0.125 g/100 ml inclusive. Further, the conditions of the mashing step can be for example set so that the saccharide content in wort obtained through the wort preparation step or the saccharide content in the non-alcohol beer-taste beverage obtained through the wort preparation step and the product preparation step are from 0.05 to 1 g/100 ml inclusive, preferably from 0.05 to 0.8 g/100 ml inclusive, more preferably from 0.05 to 0.6 g/100 ml inclusive, even more preferably from 0.05 to 0.5 g/100 ml inclusive, still more preferably from 0.05 to 0.4 g/100 ml inclusive, still even more preferably from 0.075 to 0.35 g/100 ml inclusive, more preferably from 0.1 to 0.35 g/100 ml inclusive, more preferably from 0.2 to 0.3 g/100 ml inclusive. A suitable mashing pattern can be selected for the temperature of the mashing step according to the flavor design of the marketable product.

In the mashing step, an inherent enzyme derived from malt can be used alone, or in combination with carbohydrase which is added to increase the saccarification efficiency and to obtain the desired saccharide composition.

Secondary ingredients can also be added in the mashing step. Any material commonly used in producing beer can be used as the secondary ingredient, such as corn starch, corn grits, and rice.

The wort filteration step in the present specification is a step of filtering the mash after the mashing step.

The wort-boiling step mentioned in the present specification is a step of adding hops to a filtrate that is obtained by the wort filteration step, and boiling the mixture. Hops should preferably be added before the start of boiling, at the same time as the start of boiling, or immediately after the start of boiling. Hops can be added all at once, or in successive portions.

The boiling condition in the wort-boiling step is for example set so that the α acid content in wort after boiling is from 0 to 0.1 ppm inclusive, preferably from 0 to 0.05 ppm inclusive, more preferably from 0 to 0.03 ppm inclusive, even more preferably from 0 to 0.01 ppm inclusive. Further, the boiling condition can be for example set so that the α acid content in wort after boiling is from 0 to 0.1 ppm inclusive, preferably from 0 to 0.05 ppm inclusive, more preferably from 0 to 0.04 ppm inclusive, even more preferably from 0 to 0.03 ppm inclusive, still more preferably from 0 to 0.02 ppm inclusive, still even more preferably from 0 to 0.01 ppm inclusive.

In addition, ingredients other than hops can be added during the wort-boiling step. Such ingredients include ingredients commonly used in producing beer, such as colorants, flavors and the like.

Wort can be prepared by performing the above wort-boiling step. The total amount of the extract component(s) in the wort can be in a range of any combination of a lower limit of 0.05% by weight or higher, preferably 0.075% by weight or higher, more preferably 0.1% by weight or higher, even more preferably 0.15% by weight or higher, still even more preferably 0.2% by weight or higher, and an upper limit of 1% by weight or lower, preferably 0.8% by weight or lower, more preferably 0.6% by weight or lower, even more preferably 0.5% by weight or lower, still more preferably 0.4% by weight or lower, still even more preferably 0.35% by weight or lower, more preferably 0.3% by weight or lower. The total amount of the extract component(s) in the wort is for example from 0.1 to 0.5% by weight inclusive, preferably from 0.1 to 0.25% by weight inclusive, more preferably from 0.1 to 0.125% by weight inclusive. Further examples of the total amount of the extract component(s) in the wort are from 0.05 to 1% by weight inclusive, preferably from 0.05 to 0.8% by weight inclusive, more preferably from 0.05 to 0.6% by weight inclusive, even more preferably from 0.05 to 0.5% by weight inclusive, still more preferably from 0.05 to 0.4% by weight inclusive, still even more preferably from 0.075 to 0.35% by weight inclusive, more preferably from 0.1 to 0.35% by weight inclusive, more preferably from 0.15 to 0.35% by weight inclusive, and most preferably from 0.2 to 0.3% by weight inclusive.

Further, exemplary ranges of the α acid content in the above wort are from 0 to 0.1 ppm inclusive, preferably from 0 to 0.05 ppm inclusive, more preferably from 0 to 0.03 ppm inclusive, even more preferably from 0 to 0.01 ppm inclusive. Exemplary ranges of the α acid content in the above wort are from 0 to 0.1 ppm inclusive, preferably from 0 to 0.05 ppm inclusive, more preferably from 0 to 0.04 ppm inclusive, even more preferably from 0 to 0.03 ppm inclusive, still more preferably from 0 to 0.02 ppm inclusive, still even more preferably from 0 to 0.01 ppm inclusive.

The total amount of the *mugi*-derived extract component(s) in wort is in a range of any combination of a lower limit of 0.05% by weight or higher, preferably 0.075% by weight or higher, more preferably 0.1% by weight or higher, even more preferably 0.15% by weight or higher, still more preferably 0.2% by weight or higher, and an upper limit of 1% by weight or lower, preferably 0.8% by weight or lower, more preferably 0.6% by weight or lower, even more preferably 0.5% by weight or lower, still more preferably 0.4% by weight or lower, still even more preferably 0.35% by weight or lower, more preferably 0.3% by weight or lower. The total amount of the *mugi*-derived extract component(s) in the wort is for example from 0.1 to 0.5% by weight inclusive, preferably from 0.1 to 0.25% by weight inclusive, more preferably from 0.1 to 0.125% by weight inclusive. Further examples of the total amount of the *mugi*-derived extract component(s) in the wort are from 0.05 to 1% by weight inclusive, preferably from 0.05 to 0.8% by weight inclusive, more preferably from 0.05 to 0.6% by weight inclusive, even more preferably from 0.05 to 0.5% by weight inclusive, still more preferably from 0.05 to 0.4% by weight inclusive, still even more preferably from 0.075 to 0.35% by weight inclusive, more preferably from 0.1 to 0.35% by weight inclusive, more preferably from 0.15 to 0.35% by weight inclusive, and most preferably from 0.2 to 0.3% by weight inclusive.

Further, the saccharide content in the wort can be in a range of any combination of a lower limit of 0.05 g/100 ml or higher, preferably 0.075 g/100 ml or higher, more preferably 0.1 g/100 ml or higher, even more preferably 0.2 g/100 ml or higher, and an upper limit of 1 g/100 ml or lower, preferably 0.8 g/100 ml or lower, more preferably 0.6 g/100 ml or lower, even more preferably 0.5 g/100 ml or lower, still more preferably 0.4 g/100 ml or lower, still even more preferably 0.35 g/100 ml or lower, even more preferably 0.3 g/100 ml or lower. The saccharide content in the wort of the present invention can for example be from 0.1 to 0.5 g/100 ml inclusive, preferably from 0.1 to 0.25 g/100 ml inclusive, more preferably from 0.1 to 0.125 g/100 ml inclusive. Further, the saccharide content in the wort can be for example from 0.05 to 1 g/100 ml inclusive, preferably from 0.05 to 0.8 g/100 ml inclusive, more preferably from 0.05 to 0.6 g/100 ml inclusive, even more preferably from 0.05 to 0.5 g/100 ml inclusive, still more preferably from 0.05 to 0.4 g/100 ml inclusive, still even more preferably from 0.075 to 0.35 g/100 ml inclusive, more preferably from 0.1 to 0.35 g/100 ml inclusive, more preferably from 0.2 to 0.3 g/100 ml inclusive.

The above wort can be stored until it is used in the next product preparation step. Wort can be stored in a storage tank, a container and the like at a normal temperature (25°C) or lower, but it is preferable to cool wort during storage. The wort can be cooled herein at, for example, 20°C or lower, preferably 15°C or lower, and more preferably 10°C or lower.

The product preparation step as used herein is a step of preparing a non-alcohol beer-taste beverage using wort obtained through the wort-boiling step. Seasoning components and carbon acid gas can be added to the wort. The taste of the non-alcohol beer-taste beverage can be adjusted to any taste by adding the seasoning components. Seasoning components include acidulants, flavors, and sweeteners. Preservatives, such as Vitamin C, can be added as necessary. Subsequently, wort can be kept still and further filtered, as necessary, to obtain the non-alcohol beer-taste beverage.

The above mentioned production method of non-alcohol beer-taste beverage is suitable for application to the production of the non-alcohol beer-taste beverage of the present invention.

### <Other components>

Components that are approved as food additives can be used in the present invention as long as it does not hinder the advantageous effects of the present invention. Examples include sweeteners, various acidulants, flavors, yeast extracts, colorants such as caramel colors, saponin-based substances extracted from plants such as soybean saponin or quillaja saponin, plant protein- and peptide-containing substances such as corn, soybean, or fava been, proteinaceous substances such as bovine serum albumin, seasoning agents such as dietary fiber or amino acids, antioxidants such as ascorbic acid.

### <Beverages Packed in Containers>

Non-alcohol beer-taste beverages of the present invention can be packed in containers. Containers of any shape or material can be used; specifically, bottles, cans, kegs, PET bottles or other containers can be filled with the beverage and sealed.

### EXAMPLES

The present invention is described in more detail by the Examples, without being limited in scope by the Examples.

### <Production of Non-Alcohol Beer-TasteBeverages>

Non-alcohol beer-taste beverages of the present invention whose α acid contents are in the desired range (Examples 1 to 8) and a non-alcohol beer-taste beverage whose α acid content is outside the desired scope (Comparative Example 1) were produced by the following method.

Concerning Examples 1 to 8 and Comparative Example 1, 20 kg of malt was crushed to an appropriate grain size and put in a tank for preparation, then 120 L of warm water was added to form a mash of about 50°C. The mash was kept at 50°C for 30 minutes, followed by a gradual increase in the temperature to between 65°C and 72°C to conduct saccharification for 60 minutes. The mash after saccharification has completed was heated to 77°C, then transferred to the wort filtering tank for filteration to obtain a filtrate.

Warm water was added to a portion of the obtained filtrate. The mixture ratio of the filtrate and warm water was conditioned so that the total amount of the extract components after the completion of boiling described below will be 0.4% by weight for Examples 3 to 6 and Comparative Example 1, 0.05% by weight for Example 1,0.1% by weight for Example 2,0.5% by weight for Example 7,1% by weight for Example 8.

The mixtures of the filtrate and warm water were each adjusted to a production scale of 100 L, and hops were added to them at the start of boiling, then they were boiled at 100°C for 80 minutes to obtain wort samples (hereinafter referred to as "base wort samples"). Many other wort samples (hereinafter referred to as "α acid wort samples") having the same total amount of extract components and different α acid contents were prepared by adding hops while the mixtures were boiled or by other methods. Lees were separated from the solutions after the boiling, and the resultant wort samples were cooled to about 2°C. Then, the base wort samples were mixed with one or more of the α acid wort samples, whose total amounts of the extract components were the same as that of the base wort samples, and conditioned to obtain conditioned wort samples having the desired amounts of α acid.

Appropriate amounts of antioxidants, flavors, acidulants (added in an amount that makes pH to be less than 4) were added to the conditiond wort samples and iso-α acid was added to adjust the concentration to minimize the difference in the level of the samples before the wort samples were stored for about 24 hours. Carbon acid gas was added in an appropriate amount during the process. Then, the resultant mixtures were subjected to filtration and sterilization (heated at 65°C or higher for 10 minutes) to obtain non-alcohol beer-taste beverages of the present invention (Examples 1 to 8) and a non-alcohol beer-taste beverage (Comparative Example 1).

Note that the α acid content and the iso-α acid content were measured according to "Beer Analysis Methods of BCOJ (2004.11.1 Revised ed.) 7.13 iso-α acid, α acid".

### <Assessment of Flavor>

The flavor of the non-alcohol beer-taste beverages in the present specification were assessed using a sensory test based on the following rating system. Five well-trained sensory panelists rated the existence of "bitterness in the finish" on a scale of 1 to 4. The ratings according to the following system were averaged: "not identifiable"=4, "slightly identifiable"=3, "somewhat identifiable"=2, "identifiable"= 1. Then, a separate rating scale of 1 to 3 was set forth according to the obtained average.
Average value 1.0 or higher to lower than 2.0 ×;
Average value 2.0 or higher to lower than 3.0 Δ;
Average value 3.0 or higher to 4.0 or lower ○.

### <Assessment of the Extract Components>

The amounts of the extract components in the beverages were assessed in the Examples by the following method. That is, the extract components were measured according to "Beer Analysis Methods of BCOJ (2004.11.1 Revised ed.) 7.2 Extracts".

### <Assessment of Calories>

The calorie contents were calculated according to the "On Analysis Methods, etc. for Nutrients, etc. Listed in the Nutrition Labelling Standards" as published in association with the Health Promotion Act.

### <Assessment of Saccharides>

The saccharide contents were measured using the equation given in the the Nutrition Labelling Standards for Foods (Health, Labor and Welfare Ministry Notice No. 176 in 2003).

### <Assessment of Quality>

The flavor assessment result of Examples 1 to 8 and Comparative Example 1 is shown in Table 1 below.

**[Table 1]**

| | Examples | | | | | | | | Comp.Ex |
|---|---|---|---|---|---|---|---|---|---|
| | 1 | 2 | 3 | 4 | 5 | 6 | 7 | 8 | 1 |
| Total amount of extract components (wt%) | 0.05 | 0.1 | 0.4 | 0.4 | 0.4 | 0.4 | 0.5 | 1.0 | 0.4 |
| α acid content (ppm) | 0.05 | 0.05 | 0 | 0.03 | 0.05 | 0.1 | 0.05 | 0.05 | 0.13 |
| iso-α acid content (ppm) | 12 | 12 | 12 | 12 | 12 | 12 | 12 | 12 | 12 |
| calorie (kcal/100ml) | 0.2 | 0.4 | 1.6 | 1.6 | 1.6 | 1.6 | 2 | 4 | 1.6 |
| saccharides (g/100ml) | 0.05 | 0.1 | 0.4 | 0.4 | 0.4 | 0.4 | 0.5 | 1.0 | 0.4 |
| bitterness in finish | Δ | ○ | ○ | ○ | ○ | ○ | ○ | ○ | × |

As shown in Table 1, no bitterness in the finish was identified when an α acid content was 0.1 ppm or lower (Examples 1 to 8). When comparing the Examples, it was seen that Example 1, characterized by a low total amount of the extract components, resulting in a slight bitterness in the finish, but the bitterness is not so strong that the product cannot be marketed.

The result of Comparative Example 1 was not desirable, since a bitterness in the finish was identified.

Note that an assessment of quality similar to that performed for the non-alcohol beer-taste beverages was performed in Examples 1 to 8 and Comparative Example 1 at the time when the conditioned wort samples were prepared. No bitterness in the finish was identified for the conditioned wort samples for Examples 1 to 8. However, bitterness in the finish was identified in the conditioned wort sample for Comparative Example 1, thus, the conditioned wort sample for Comparative Example 1 was not desirable.

## Claims

1. A non-alcohol beer-taste beverage, wherein a total amount of an extract component(s) is from 0.05 to 0.5% by weight inclusive, and an α acid content is from 0 to 0.1 ppm inclusive.

2. The non-alcohol beer-taste beverage according to Claim 1, wherein the α acid content is from 0 to 0.05 ppm inclusive.

3. The non-alcohol beer-taste beverage according to Claim 1, wherein the α acid content is from 0 to 0.03 ppm inclusive.

4. The non-alcohol beer-taste beverage according to Claim 1, wherein the α acid content is from 0 to 0.01 ppm inclusive.

5. The non-alcohol beer-taste beverage according to any one of Claims 1 to 4, wherein the total amount of the extract component(s) is from 0.1 to 0.35% by weight inclusive.

6. The non-alcohol beer-taste beverage according to any one of Claims 1 to 5, wherein a calorie content is from 0.2 to 2 kcal/100 ml inclusive.

7. The non-alcohol beer-taste beverage according to Claim 6,wherein the calorie content is from 0.2 to 1.4 kcal/100 ml inclusive.

8. The non-alcohol beer-taste beverage according to any one of Claims 1 to 7, wherein a saccharide content is from 0.05 to 0.5 g/100 ml inclusive.

9. The non-alcohol beer-taste beverage according to Claim 8, wherein the saccharide content is from 0.1 to 0.35 g/100 ml inclusive.

10. The non-alcohol beer-taste beverage according to any one of Claims 1 to 9, wherein the extract component(s) comprise a *mugi*-derived extract component(s).

11. The non-alcohol beer-taste beverage according to Claims 1 to 10, which is a non-fermented, non-alcohol, beer-taste beverage.

12. Wort having a total amount of an extract component(s) that is from 0.05 to 0.5% by weight inclusive, and an α acid content that is from 0 to 0.1 ppm inclusive.

13. The wort according to Claim 12, wherein the α acid content is from 0 to 0.05 ppm inclusive.

14. The wort according to Claim 12, wherein the α acid content is from 0 to 0.03 ppm inclusive.

15. The wort according to Claim 12, wherein the α acid content is from 0 to 0.01 ppm inclusive.

16. The wort according to any one of Claims 12 to 15, wherein the total amount of the extract component(s) is from 0.1 to 0.35 % by weight inclusive.

17. A production method for producing a non-alcohol beer-taste beverage comprising a step of adding a seasoning component and carbonic acid gas to wort having a total amount of an extract component(s) that is from 0.05 to 0.5% by weight inclusive, and an α acid content that is from 0 to 0.1 ppm inclusive.

18. The production method of Claim 17, wherein the α acid content is from 0 to 0.05 ppm inclusive.

19. The production method of Claim 17, wherein the α acid content is from 0 to 0.03 ppm inclusive.

20. The production method of Claim 17, wherein the α acid content is from 0 to 0.01 ppm inclusive.

21. The production method according to any one of Claims 17 to 20, wherein the total amount of the extract component(s) is from 0.1 to 0.35% by weight inclusive.

22. The production method according to any one of Claims 17 to 21, which is exclusive of fermentation.

23. The production method according to any one of Claims 17 to 22, for producing the non-alcohol beer-taste beverage according to any one of Claims 1 to 11.
